# EUROPEAN PATENT APPLICATION

(11) **EP 4 395 267 A1**
(43) Date of publication of application: **03.07.2024**
(21) Application number: 22878948.3
(22) Date of filing: 07.10.2022
(51) Int. Cl.: H04L 47/20, H04L 47/2475, H04L 47/2441, H04W 28/02, H04W 92/24

(54) **METHOD AND APPARATUS FOR TRAFFIC PROCESSING USING TRAFFIC CLASSIFICATION IN WIRELESS COMMUNICATION SYSTEM**

(30) Priority: 07.10.2021 KR 20210133459
(71) Applicant: Samsung Electronics Co., Ltd., Suwon-si, Gyeonggi-do 16677 (KR)
(72) Inventor: LEE, Jicheol, Suwon-si, Gyeonggi-do 16677 (KR); KIM, Hyesung, Suwon-si, Gyeonggi-do 16677 (KR); JEONG, Sangsoo, Suwon-si, Gyeonggi-do 16677 (KR)
(74) Representative: Gulde & Partner
(86) International application number: PCT/KR2022/015113
(87) International publication number: WO 2023/059127

(57) **Abstract**

The present disclosure relates to: a communication technique for a 5G communication system for supporting a higher data transmission rate higher a 4G system; and a system therefor.

According to an embodiment of the present disclosure, a method for a first network node in a wireless communication system may be disclosed, the method comprising the steps of: receiving, from a second network node, a policy and charging control (PCC) rule and fully qualified domain name (FQDN)-based information that indicate any one of traffic detections via DNS message reporting or a DNS resolution; generating a DNS message processing rule on the basis of the FQDN-based information; transmitting the DNS message processing rule to a third network node; and receiving, from the third network node, an FQDN and an IP address for the FQDN, wherein the FQDN and the IP address are identified by the third network node via detection of a DNS response message on the basis of the DNS message processing rule.

## Description

### [Technical Field]

The disclosure relates to a wireless communication system, and more specifically, to a method and apparatus for handling traffic using traffic classification in a cellular wireless communication system, such as a 5G system.

### [Background Art]

Fifth generation (5G) mobile communication technologies define broad frequency bands such that high transmission rates and new services are possible, and can be implemented not only in "Sub 6 gigahertz (GHz)" bands such as 3.5 GHz, but also in "Above 6 GHz" bands referred to as millimeter wave (mmWave) such as 28 GHz and 39 GHz. In addition, it has been considered to implement sixth generation (6G) mobile communication technologies, which is referred to as Beyond 5G systems, in terahertz (THz) bands (for example, 95 GHz to 3 THz bands) in order to accomplish transmission rates fifty times faster than 5G mobile communication technologies and ultra-low latencies one-tenth of 5G mobile communication technologies.

At the beginning of the development of 5G mobile communication technologies, in order to support services and to satisfy performance requirements in connection with enhanced Mobile BroadBand (eMBB), Ultra Reliable Low Latency Communications (URLLC), and massive Machine-Type Communications (mMTC), there has been ongoing standardization regarding beamforming and massive multi input multi output (MIMO) for mitigating radio-wave path loss and increasing radio-wave transmission distances in mmWave, supporting various numerologies (operating a plurality of subcarrier spacings) for efficiently utilizing mmWave resources and dynamic operation of slot formats, initial access technologies for supporting multi-beam transmission and broadbands, definition and operation of Band-Width Part (BWP), new channel coding methods such as a Low Density Parity Check (LDPC) code for large amount of data transmission and a polar code for highly reliable transmission of control information, L2 pre-processing, and network slicing for providing a dedicated network specialized to a specific service.

Currently, there are ongoing discussions regarding improvement and performance enhancement of initial 5G mobile communication technologies in view of services to be supported by 5G mobile communication technologies, and there has been physical layer standardization regarding technologies such as Vehicle-to-everything (V2X) for aiding driving determination by autonomous vehicles based on information regarding positions and states of vehicles transmitted by the vehicles and for enhancing user convenience, New Radio Unlicensed (NR-U) aimed at system operations conforming to various regulation-related requirements in unlicensed bands, new radio (NR) user equipment (UE) Power Saving, Non-Terrestrial Network (NTN) which is UE-satellite direct communication for providing coverage in an area in which communication with terrestrial networks is unavailable, and positioning.

Moreover, there has been ongoing standardization in air interface architecture/protocol regarding technologies such as Industrial Internet of Things (IIoT) for supporting new services through interworking and convergence with other industries, Integrated Access and Backhaul (IAB) for providing a node for network service area expansion by supporting a wireless backhaul link and an access link in an integrated manner, mobility enhancement including conditional handover and Dual Active Protocol Stack (DAPS) handover, and two-step random access for simplifying random access procedures (2-step RACH for NR). There also has been ongoing standardization in system architecture/service regarding a 5G baseline architecture (for example, service based architecture or service based interface) for combining Network Functions Virtualization (NFV) and Software-Defined Networking (SDN) technologies, Mobile Edge Computing (MEC) for receiving services based on UE positions, and the like.

As 5G mobile communication systems are commercialized, connected devices that have been exponentially increasing will be connected to communication networks, and it is accordingly expected that enhanced functions and performances of 5G mobile communication systems and integrated operations of connected devices will be necessary. To this end, new research is scheduled in connection with eXtended Reality (XR) for efficiently supporting Augmented Reality (AR), Virtual Reality (VR), Mixed Reality (MR) and the like, 5G performance improvement and complexity reduction by utilizing Artificial Intelligence (AI) and Machine Learning (ML), AI service support, metaverse service support, drone communication, and the like.

Furthermore, such development of 5G mobile communication systems will serve as a basis for developing not only new waveforms for securing coverage in terahertz bands of 6G mobile communication technologies, multi-antenna transmission technologies such as Full Dimensional MIMO (FD-MIMO), array antennas and large-scale antennas, metamaterial-based lenses and antennas for improving coverage of terahertz band signals, high-dimensional space multiplexing technology using Orbital Angular Momentum (OAM), and Reconfigurable Intelligent Surface (RIS) technology, but also full-duplex technology for increasing frequency efficiency of 6G mobile communication technologies and improving system networks, AI-based communication technology for implementing system optimization by utilizing satellites and Artificial Intelligence (AI) from the design stage and internalizing end-to-end AI support functions, and next-generation distributed computing technology for implementing services at levels of complexity exceeding the limit of UE operation capability by utilizing ultra-high-performance communication and computing resources.

Meanwhile, the 3GPP, which is in charge of cellular mobile communication standards, has named a new core network structure 5G core (5GC) and is standardizing the 5GC in order to evolve from an existing 4G LTE system to a 5G system.

The 5GC can support the following differentiated functions compared to the evolved packet core (EPC), which is the existing 4G network core.

First, a network slice function is introduced in the 5GC. According to a 5G requirement, the 5GC needs to support various types of terminals and services, for example, enhanced mobile broadband (eMBB), ultra-reliable low-latency communications (URLLC), and massive machine-type communications (mMTC). Each terminal/service has different requirements in a core network. For example, an eMBB service may require a high data rate, while an URLLC service may require high stability and low latency. To satisfy various service requirements, a proposed technology is network slicing.

Network slicing is a method for producing a plurality of logical networks by virtualization of one physical network, and each network slice instance (NSI) may have a different characteristic. Thus, each NSI may have a network function (NF) suitable for the characteristic thereof, thereby satisfying various service requirements. Accordingly, an NSI suitable for the characteristic of a required service may be allocated to each terminal, thereby efficiently supporting various 5G services.

Second, the 5GC can easily support a network virtualization paradigm by separating a mobility management function and a session management function. In existing 4G LTE, all terminals can receive services from a network through signaling exchange with a single core device called a mobility management entity (MME) that is in charge of registration, authentication, mobility management, and session management functions. However, in 5G, as the number of terminals is explosively increasing and mobility and traffic/session characteristics to be supported are segmented according to the types of terminals, when a single device, such as an MMF, supports all functions, scalability to add an entity for each required function is bound to decrease. Accordingly, various functions are being developed based on a structure in which a mobility management function and a session management function are separated in order to address complexity in function/implementation of a core device in charge of a control plane and to improve scalability in signaling load.

### [Disclosure of Invention]

### [Technical Problem]

In the current 5GC network, an operator optimizes network resources by routing the traffic generated by the application program installed on a terminal as expected by the operator through edge computing or network slices that the operator operates directly or cooperatively.

The policy for forwarding this traffic and applying QOS and charging is called policy and charging control (PCC) rule. Existing PCC rule was used to identify traffics using Internet Protocol (IP) header information or application identifier. However, IP header information is difficult to use in case where the server's IP address changes in a cloud situation, and the application identifier requires a lot of processing to handle traffic in a user plane function (UPF).

Therefore, the disclosure provides an apparatus and method for providing traffic by utilizing an edge application server discovery function (EASDF), which has been introduced to handle DNS messages to provide edge computing in a mobile communication system.

In addition, the disclosure provides a method and apparatus for detecting application traffic in a mobile communication system supporting an edge computing system.

In addition, the disclosure provides a method and apparatus for identifying whether terminal traffic is appropriately routed in an edge computing system.

In addition, the disclosure provides a method and apparatus for charging, quality of service, and routing for each traffic in an edge computing system.

### [Solution to Problem]

According to an embodiment of the disclosure, a method of a first network node in a wireless communication system, comprising receiving, from a second network node, a policy and charging control (PCC) rule and fully qualified domain name (FQDN)-based information that indicate any one of traffic detections via DNS message reporting or a DNS resolution; generating a DNS message handling rule on the basis of the FQDN-based information; transmitting the DNS message handling rule to a third network node; and receiving, from the third network node, an FQDN and an IP address for the FQDN, wherein the FQDN and the IP address are identified by the third network node via detection of a DNS response message on the basis of the DNS message handling rule may be disclosed.

According to another embodiment of the disclosure, a method of a second network node in a wireless communication system, comprising receiving, from a fifth network node, a policy and charging control (PCC) rule and fully qualified domain name (FQDN)-based information that indicate any one of traffic detections via DNS message reporting or a DNS resolution; and transmitting the PCC rule and the FQDN-based information to a first network node may be disclosed.

According to another embodiment of the disclosure, a first network node in a wireless communication system, comprising a transceiver; and a controller, wherein the controller is configured to receive, from a second network node, a policy and charging control (PCC) rule and fully qualified domain name (FQDN)-based information that indicate any one of traffic detections via DNS message reporting or a DNS resolution, generate a DNS message handling rule on the basis of the FQDN-based information, transmit the DNS message handling rule to a third network node, and receive, from the third network node, an FQDN and an IP address for the FQDN, wherein the FQDN and the IP address are identified by the third network node via detection of a DNS response message on the basis of the DNS message handling rule may be disclosed.

According to another embodiment of the disclosure, a second network node in a wireless communication system, comprising a transceiver; and a controller.

The controller is configured to receive, from a fifth network node, a policy and charging control (PCC) rule and fully qualified domain name (FQDN)-based information that indicate any one of traffic detections via DNS message reporting or a DNS resolution and transmit the PCC rule and the FQDN-based information to a first network node may be disclosed.

### [Advantageous Effects of Invention]

According to the disclosure, in case of supporting an edge computing system in a mobile communication system, QoS application, PCC policy application, and application traffic detection functions for user traffic can be provided based on a fully qualified domain name (FQDN), rather than using an application identifier-based traffic detection method that is complicated and requires pre-configuration.

In addition, the disclosure can detect FQDN-based traffic even in case where the server's IP address changes frequently in a cloud environment.

The advantages according to the disclosure is described in more detail as follows.

FQDN makes it easy to identify services, is simple, and is error-free compared to deep packet inspection (DPI).

The advantage of the FQDN-SDF-based filter over the IP-based filter is that the terminal can identify the application server providing the service by FQDN. IP-based filters cannot generate correct traffic rules in case where the application layer server exists in the cloud and the IP address changes dynamically. Further, as in a content delivery network (CDN), in case where local servers provide the same service with different IP addresses for each area, different IP addresses for the same FQDN for each area must be provided as IP Filter rules. In this way, it is close to impossible to configure different IP addresses in advance for each area.

The advantage of FQDN-SDF-based SDF over DPI is that it requires a small amount of processing power in a very simple manner. DPI is very simple as it does not detect traffic patterns. Further, multiple services with the same traffic pattern can be identified by FQDN. Currently, most application traffics are encrypted traffics, and in case where DPI cannot be provided for the encrypted traffics, accurate traffic detection is possible through DNS detection. Furthermore, since traffic rules are generated based on the DNS Response message delivered to the terminal, it can provide a more accurate traffic detection function than DPI detection.

### [Brief Description of Drawings]

FIG. 1 is a diagram illustrating a network structure, and a connection relationship between interfaces and UEs in a 5G system, according to an embodiment of the disclosure.
FIG. 2 is an example diagram illustrating a network constitution and signal flow to describe an application traffic detection method using a service data flow template.
FIG. 3 is an example diagram illustrating a network constitution and signal flow to describe an application traffic detection method using a service data flow template.
FIG. 4 is a diagram illustrating a corner network constitution and DN connection of a 5G system to which the disclosure is applied.
FIG. 5 is an example diagram for describing an application traffic detection operation using an FQDN-based SDF template according to an embodiment of the disclosure.
FIG. 6 is an example diagram for describing a QoS and charging control method using an FQDN-based SDF template according to another embodiment of the disclosure.
FIG. 7 is an example diagram for describing a procedure for detecting application traffic using an FQDN-based SDF template according to an embodiment of the disclosure.
FIG. 8 is an example diagram for describing a procedure for detecting traffic for QoS and charging control using an FQDN-based SDF template according to another embodiment of the disclosure.
FIG. 9 is a functional block diagram of NF to which the disclosure is applicable.
FIG. 10 is a functional block diagram of a terminal to which the disclosure is applicable.

### [Mode for the Invention]

Hereinafter, embodiments of the disclosure will be described with reference to accompanying drawings. In addition, in describing the disclosure, a detailed description of known functions and constitutions incorporated herein will be omitted when it is determined that the detailed description may unnecessarily obscure the gist of the disclosure. Furthermore, terms to be described hereunder have been defined by taking into consideration functions in the disclosure, and may be different depending on a user, an operator's intention or practice. Accordingly, each term should be defined based on contents over the entire specification. For the same reason, in the accompanying drawings, some elements may be exaggerated, omitted, or schematically illustrated. Further, the size of each element does not completely reflect the actual size. In each drawing, identical or corresponding elements are provided with identical reference numerals. The advantages and features of the disclosure and ways to achieve them will be apparent by making reference to embodiments as described below in detail in conjunction with the accompanying drawings. However, the disclosure is not limited to the embodiments set forth below, but may be implemented in various different forms. The embodiments are provided only to completely disclose the disclosure and inform those skilled in the art of the scope of the disclosure, and the disclosure is defined only by the scope of the appended claims. Throughout the specification, the same or like reference numerals designate the same or like elements. In addition, in describing the disclosure, a detailed description of known functions and constitutions incorporated herein will be omitted when it is determined that the detailed description may unnecessarily obscure the gist of the disclosure. Furthermore, terms to be described hereunder have been defined by taking into consideration functions in the present disclosure, and may be different depending on a user, an operator's intention or practice. Accordingly, each term should be defined based on contents over the entire specification.

Hereinafter, a base station may be an entity allocating resource to a terminal and may be at least one of eNodeB, Node B, base station (BS), radio access network (RAN), access network (AN), RAN node, wireless access unit, base station controller, and node over network. The terminal may include user equipment (UE), mobile station (MS), cellular phone, smartphone, computer, or multimedia system capable of performing communication functions. In the disclosure, a downlink (DL) may refer to a wireless transmission path of signal transmitted from the base station to the terminal, and an uplink (UL) refers to a wireless transmission path of signal transmitted from the terminal to the base station. Although LTE or LTE-A system is described in connection with embodiments of the disclosure, as an example, embodiments of the disclosure may also apply to other communication systems with a similar technical background or channel form. For example, communication systems to which embodiments of the disclosure are applied may include post-LTE-A, 5G mobile communication technology (e.g., 5G or NR). Hereinafter, 5G may be a concept that includes existing LTE, LTE-A, and other similar services. Furthermore, embodiments of the disclosure will also be applied to other communication systems through some modifications to an extent that does not significantly deviate from the scope of the disclosure when judged by those of ordinary skill in the art. Here, it will be understood that combinations of blocks in flowcharts or process flow diagrams may be performed by computer program instructions.

Because these computer program instructions may be loaded into a processor of a general purpose computer, a special purpose computer, or another programmable data processing apparatus, the instructions, which are performed by a processor of a computer or another programmable data processing apparatus, generate means for performing functions described in the flowchart block(s). The computer program instructions may be stored in a computer-usable or computer-readable memory capable of directing a computer or another programmable data processing apparatus to implement a function in a particular manner, and thus the instructions stored in the computer-usable or computer-readable memory may also be capable of producing manufacturing items containing instruction means for performing the functions described in the flowchart block(s). The computer program instructions may also be loaded into a computer or another programmable data processing apparatus, and thus, instructions for operating the computer or the other programmable data processing apparatus by generating a computer-executed process when a series of operations are performed in the computer or the other programmable data processing apparatus may provide operations for performing the functions described in the flowchart block(s).

In addition, each block may represent a portion of a module, segment, or code that includes one or more executable instructions for executing specified logical function(s). It should also be noted that in some alternative implementations, functions mentioned in blocks may occur out of order. For example, two blocks illustrated successively may actually be executed substantially concurrently, or the blocks may sometimes be performed in a reverse order according to the corresponding function. Here, the term "unit" used in the disclosure means a software component or hardware component such as field programmable gate array (FPGA) or application specific integrated circuit (ASIC), and performs a specific function. However, the term "unit" is not limited to software or hardware. The "unit" may be formed so as to be in an addressable storage medium, or may be formed so as to operate one or more processors. Thus, for example, the term "unit" may refer to components such as software components, object-oriented software components, class components, and task components, and may include processes, functions, attributes, procedures, subroutines, segments of program code, drivers, firmware, micro codes, circuits, data, a database, data structures, tables, arrays, or variables. A function provided by the components and "units" may be associated with the smaller number of components and "units", or may be further divided into additional components and "units". Furthermore, the components and "units" may be embodied to reproduce one or more CPUs in a device or security multimedia card. In addition, in an embodiment, 'units' may include one or more processors.

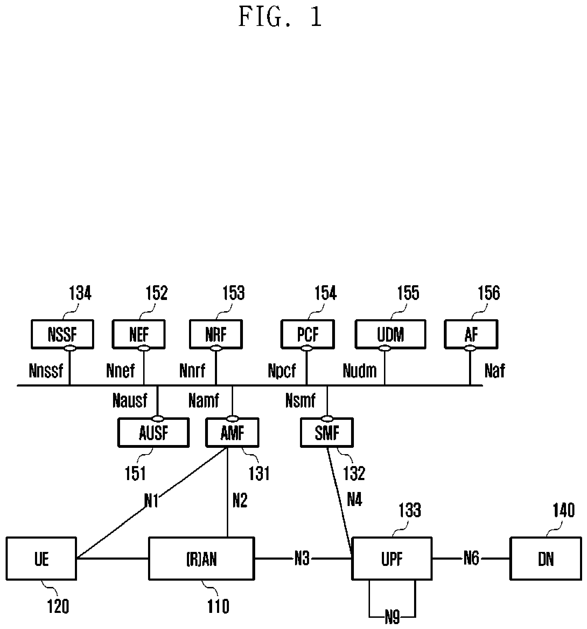

FIG. 1 is a diagram illustrating a network structure, and a connection relationship between interfaces and UEs in a 5G system, according to an embodiment of the disclosure.

The network entity included in the network structure of the 5G system of FIG. 1 may include a network function (NF) according to system implementation.

Before referring to FIG. 1, NFs will be further described. As previously described, in the 5G core network, all network entities are virtualized and constituted with respective NFs. These NFs may actually run on servers. For example, one NF may run on one server, or different NFs may run on one server. As another example, two or more NFs performing the same function may be running on one server. In addition, each NF may be implemented as one instance as needed. However, since respective NFs may be implemented on a server, it may be understood that they include a physical device. Therefore, in the following description, one specific NF may be understood as including the constitution of a device.

With reference to FIG. 1, the network structure of the 5G system may include various network entities. As an example, the 5G system may include an authentication server function (AUSF) 151, a (core) access and mobility management function (AMF) 131, a session management function (SMF) 132, a policy control function (PCF) 154, an application function (AF) 156, an unified data management (UDM) 155, a data network (DN) 140, a network exposure function (NEF) 152, a network slice selection function (NSSF) 134, a network repository function (NRF) 153, an edge application service domain repository (EDR) (not shown in FIG. 1), an edge application server (EAS) (not shown in FIG. 1), an user plane function, UPF) 133, a (radio) access network ((R)AN)) 110, and a terminal, i.e., a user equipment (UE) 120.

Each NF of the 5G system illustrated in FIG. 1 may support the following functions.

The AUSF 151 may process and store data for authenticating the UE 120.

The AMF 131 provides functions for per-UE access and mobility management and may basically connect to one AMF per UE. In particular, the AMF 131 may support functions such as inter-CN node signaling for mobility between 3GPP access networks, radio access network (RAN) CP interface (i.e., N2 interface) termination, non access stratum (NAS) signaling termination (N1), NAS signaling security (NAS ciphering) and integrity protection, AS security control, registration management (registration area management), connectivity management, idle mode UE reachability (including controlling and performing paging retransmission), mobility management control (subscription and policy), intra-system mobility and inter-system mobility support, support of network slicing, SMF selection, lawful intercept (for interface to AMF event and LI system), providing delivery of session management (SM) messages between the UE and the SMF, transparent proxy for SM message routing, access authentication, access authorization including a roaming authority check, providing delivery of SMS messages between the UE and the SMSF, security anchor function (SAF), and/or security context management (SCM). All or some of the functions of the AMF 131 may be supported in a single instance of one AMF.

The DN 140 may mean, for example, an operator service, Internet access, a third party service, or the like. The DN 140 may transmit a downlink protocol data unit (PDU) to the UPF 133 or receive the PDU transmitted from the UE 120 from the UPF 133.

The PCF 154 may receive information about packet flow from the application server and provide the function of determining the policy such as mobility management or session management. Specifically, the PCF 154 may support functions such as support of a signalized policy framework for controlling network operations, providing a policy rule to allow control plane function(s) (e.g., AMF, SMF, etc.) to execute a policy rule, and implementation of a front end for accessing subscription information related to policy decision in the user data repository (UDR).

The SMF 132 provides session management function and, in case where the UE has multiple sessions, the multiple sessions may be managed per session by a different SMF. Specifically, the SMF 132 may support functions such as session management (e.g., session establishment, modification, and release including maintaining tunnel between the UPF 133 and the (R)AN 110), UE IP address allocation and management (optionally including authentication), selection and control of a UP function, traffic steering configurations for routing traffic to a proper destination in UPF 133, interface termination towards policy control functions, execution of control part of policy and qualify of service (QoS), lawful intercept (for interface to SM event and LI system), termination of SM part of NAS message, downlink data notification, AN-specific SM information publisher (transferred from the AMF 131 via N2 to the (R)AN 110), SSC mode decision of session, and roaming function. All or some of the functions of the SMF 132 may be supported in a single instance of one SMF.

The UDM 155 may store user's subscription data, policy data, and the like. The UDM 155 may include two parts, i.e., an application front end (FE) (not shown) and user data repository (UDR) (not shown).

The FE may include UDM FE in charge of location management, subscription management, credential processing, etc., and PCF in charge of policy control. The UDR may store data required for the functions provided by UDM-FE and the policy profile required by PCF. The data stored in the UDR may include user subscription data and policy data including subscription identifier, security credential, access and mobility-related subscription data, and session-related subscription data. The UDM-FE may access the subscription information stored in UDR and support functions such as authentication credential processing, user identification handling, access authentication, registration/mobility management, subscription management, and SM management.

The UPF 133 may transfer a downlink PDU, received from the DN 140, to the UE 120 via the (R)AN 110, and transfer the uplink PDU, received from the UE 120 via the (R)AN 110, to the DN 140. Specifically, the UPF 133 may support functions such as an anchor point for intra/inter RAT mobility, external PDU session point of interconnection to data network, packet routing and forwarding, packet inspection and user plane part of policy rule, lawful intercept, traffic usage reporting, uplink classifier for supporting routing of traffic flow to data network, branching point for supporting multi-home PDU session, QoS handling (e.g., packet filtering, gating, uplink/downlink rate execution) for user plane, uplink traffic verification (mapping between service data flow (SDF) and QoS flow), transport level packet marking in uplink and downlink, downlink packet buffering, and downlink data notification triggering. All or some of the functions of the UPF 133 may be supported in a single instance of one UPF.

The AF 156 may interact with the 3GPP core network for providing services (e.g., supporting functions such as application influence on traffic routing, network capability exposure approach, and interactions with policy framework for policy control).

The NSSF 214 may select a set of network slice instances serving the UE 201. In addition, the NSSF 214 may determine allowed network slice selection assistance information (NSSAI) and, if necessary, perform mapping on subscribed single-network slice selection assistance information (S-NSSAI). In addition, the NSSF 214 may determine the configured NSSAI and, if necessary, perform mapping to the subscribed S-NSSAIs. In addition, the NSSF 214 may determine the set of AMFs used to serve the UE, or may query the NRF 215 to determine a list of candidate AMFs depending on configurations.

The (R)AN 110 collectively refers to new radio access technologies that support both evolved E-UTRA, which is an evolution from 4G radio access technology, and new radio (NR) access technology (e.g., gNB).

gNB may support functions for radio resource management (i.e., radio bearer control, radio admission control, connection mobility control, dynamic allocation of resources (i.e., scheduling) to the UE 120 on uplink/downlink), Internet protocol (IP) header compression, encryption and integrity protection of user data stream, in case where routing to the AMF is not determined from information provided to the UE, selection of an AMF in case where the UE 120 attaches, routing of user plane data to UPF(s), routing of control plane information to AMF, connection setup and release, scheduling and transmission (generated from the AMF) of paging message, scheduling and transmission (generated from the AMF or operating and maintenance (O&M)) of system broadcast information, measurement and measurement reporting configuration for mobility and scheduling, transport level packet marking on uplink, session management, support of network slicing, QoS flow management and mapping to data radio bearer, support of UE in inactive mode, distribution of NAS messages, NAS node selection, radio access network sharing, dual connectivity, and tight interworking between NR and E-UTRA.

The UE 120 is a user device, which may be referred to as a terminal, mobile equipment (ME), mobile station (MS), etc., and may include the terminal mentioned previously in the description of FIG. 1. In addition, the user device may be a portable device, such as a laptop computer, mobile phone, personal digital assistant (PDA), smartphone, or multimedia device or may be a non-portable device, e.g., a personal computer (PC) or vehicle-mounted device. The UE 120 may access two (i.e., local and central) data networks simultaneously using multiple PDU sessions. Herein, two SMFs may be selected for different PDU sessions. However, each SMF may have the ability to control both the local UPF and the central UPF within the PDU session. In addition, the UE 120 may simultaneously access two (i.e., local and central) data networks provided within a single PDU session. Meanwhile, FIG. 1 illustrates a reference model for a case where the UE 120 accesses one DN 140 using one PDU session for convenience of explanation, but the disclosure is not limited thereto. In addition, in this specification, a UE and a terminal may be used interchangeably for description, and this may be the UE depicted in the drawing.

The NEF 152 may provide means to securely expose capabilities and services for, e.g., third party, internal exposure/re-exposure, application functions, and edge computing, provided by the 3GPP network functions. The NEF 152 may receive information based on exposed capability(ies) of other NF(s), from other NF(s). The NEF 152 may store the received information as structured data using a standardized interface to the data storage network function. The stored information may be re-exposed to other NF(s) and AF(s) by the NEF 1152 and be used for other purposes, e.g., analysis.

In an NF repository function (NRF) 153, all of the NFs illustrated in FIG. 1 may interact with the NRF if necessary.

The NRF 153 may support a service discovery function. The NRF 153 may receive an NF discovery request from an NF instance and provide discovered NF instance information to the NF instance. In addition, the NRF 153 may maintains available NF instances and their supporting services.

In a 3GPP system, a conceptual link connecting between NFs in the 5G system is defined as a reference point. As an example, reference point(s) included in the 5G system of FIG. 1 are as follows.
- N1: reference point between the UE 101 and the AMF 103
- N2: reference point between the (R)AN 102 and the AMF 103
- N3: reference point between the (R)AN 102 and the UPF 104
- N4: reference point between the SMF 105 and the UPF 104
- N5: reference point between the PCF 106 and the AF 107 (not shown in FIG. 1)
- N6: reference point between the UPF 104 and the DN 110
- N7: reference point between the SMF 105 and the PCF 106 (not shown in FIG. 1)
- N8: reference point between the UDM 109 and the AMF 103 (not shown in FIG. 1)
- N9: reference point between two core UPFs 104 (not shown in FIG. 1)
- N10: reference point between the UDM 109 and the SMF 105 (not shown in FIG. 1)
- N11: reference point between the AMF 103 and the SMF 105 (not shown in FIG. 1)
- N12: reference point between the AMF 103 and the AUSF 108 (not shown in FIG. 1)
- N13: reference point between the UDM 109 and the AUSF 108 (not shown in FIG. 1)
- N14: reference point between two AMFs 103 (not shown in FIG. 1)
- N15: reference point between the PCF and the AMF in case of non-roaming scenario, and reference point between the PCF in visited network and the AMF in case of roaming scenario (not shown in FIG. 1)

In order to help understand the technical issues to be solved in the disclosure, an application traffic detection method using the existing service data flow (SDF) template and the problems with QoS and charging methods will be discussed first.

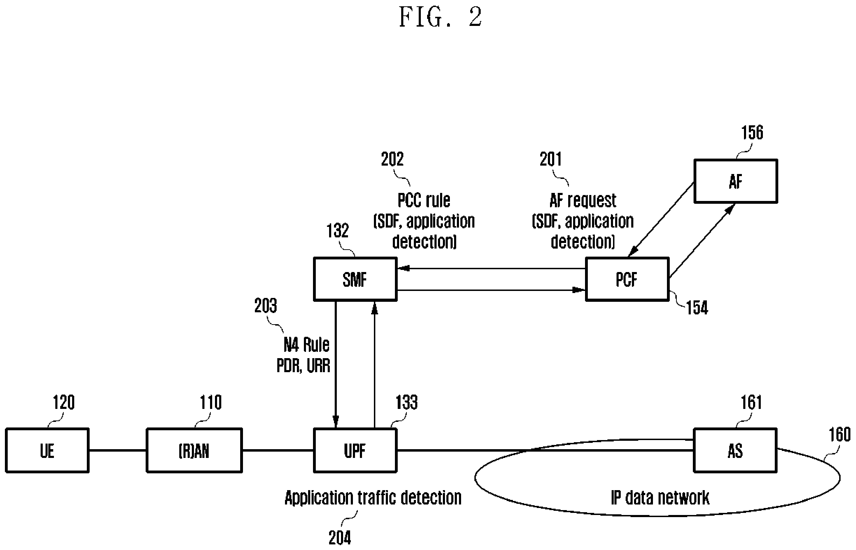

FIG. 2 is an example diagram illustrating a network constitution and signal flow to describe an application traffic detection method using a service data flow template.

The network components of the 5G system of FIG. 2 will be described using the components of FIG. 1 described above. Therefore, the same reference numerals as those used in FIG. 1 will be used, and components not illustrated in FIG. 1 may also be included in or connected to the 5G system of FIG. 1.

When reviewing the components of the 5G system illustrated in FIG. 2, the UE 120, (R)AN 110, UPF 133, SMF 132, PCF 154, and AF 156 are illustrated. It is apparent to those skilled in the art that, in addition to the components illustrated in FIG. 2, at least one NF or more may be included among the components illustrated in FIG. 1. In addition, FIG. 2 illustrates a specific application server 161 within the IP data network 160. In addition, in the specification, a UE and a terminal may be used interchangeably for description, and this may be the UE depicted in the drawing.

The SDF template may detect traffics through the application traffic method using TCP/IP header information, traffic patterns determined by application identifiers, or deep packet inspection (DPI).

With reference to FIG. 2, an application traffic detection method using TCP/IP header information will be described first.

The AF 156 may transmit an AF request message to the PCF 154 in operation 201. The AF request message may include SDF and application detection information.

The PCF 154, which has received the AF request message, may generate a PCC rule using the information included in the AF request message and transmit the PCC rule to the SMF 132 in operation 202. In this case, the PCC rule may include the SDF and application detection included in the AF request message.

The SMF 132, which has received the PCC rule, may generate an N4 rule using the information included in the PCC rule, and in operation 203, may transmit the N4 rule, packet detection rule (PDR), and usage reporting rule (URR) together to the UPF 133, or may include PDR, URR in the N4 rule and transmit the same.

The UPF 133 may detect traffic based on the N4 rule, PDR, and URR of the packet transmitted and received between a specific AS 161 of the IP data network 160 and the UE 120. In this case, the UPF 133 may detect traffic provided by the AF 156 using TCP/IP header information when detecting traffic.

In this way, the application traffic detection method using information of the TCP/IP header may be performed with relatively little UPF processing. However, the method is not suitable in an environment where the server's IP address may change frequently in a cloud environment, and the IP address of the same service may change depending on the content delivery network (CDN) operated by a 3rd party.

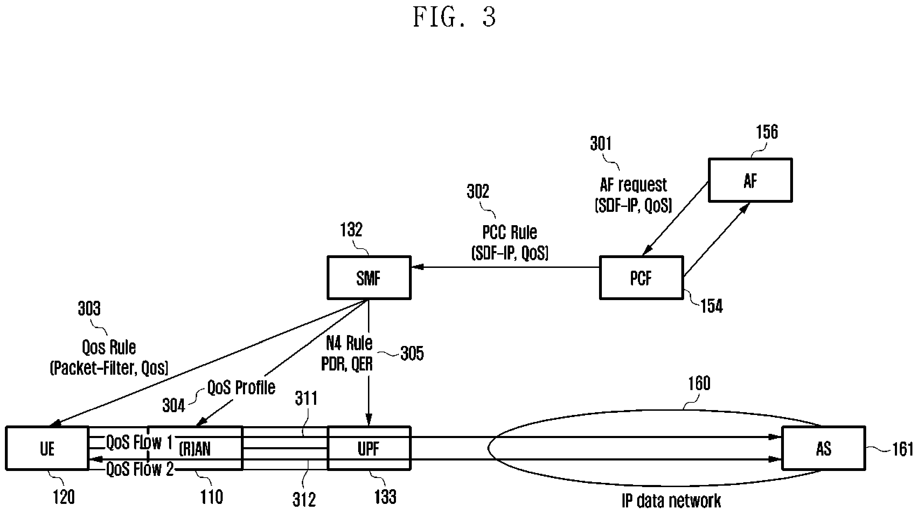

FIG. 3 is an example diagram illustrating a network constitution and signal flow to describe an application traffic detection method using a service data flow template.

The network components of the 5G system of FIG. 3 will be described using the components of FIG. 1 described above. Therefore, the same reference numerals as those used in FIG. 1 will be used, and components not illustrated in FIG. 1 may also be included in or connected to the 5G system of FIG. 1.

When reviewing the components of the 5G system illustrated in FIG. 3, the UE 120, (R)AN 110, UPF 133, SMF 132, PCF 154, and AF 156 are illustrated. It is apparent to those skilled in the art that, in addition to the components illustrated in FIG. 2, at least one NF or more may be included among the components illustrated in FIG. 1. In addition, FIG. 3 illustrates a specific application server 161 within the IP data network 160. In addition, in the specification, a UE and a terminal may be used interchangeably for description, and this may be the UE depicted in the drawing.

With reference to FIG. 3, a traffic detection method through a traffic pattern determined by an application identifier or deep packet inspection (DPI) will be described.

The AF 156 may transmit an AF request message to the PCF 154 in operation 301. The AF request message may include SDF-IP and quality of service (QoS) information.

The PCF 154, which has received the AF request message, may generate a PCC rule using the information included in the AF request message and transmit the PCC rule to the SMF 132 in operation 302. In this case, the PCC rule may include the SDF-IP and QoS information included in the AF request message.

The SMF 132, which has received the PCC rule, may generate a QoS rule information including a packet-filter and QoS information, and in operation 303, may transmit the QoS rule information to the UE 120.

In addition, the SMF 132 may transmit QoS profile information to the (R)AN 110 in operation 304, generate an N4 rule using the information included in the PCC rule in operation 305, and transmit the N4 rule, packet detection rule (PDR), and QoS enforcement rule (QER) together to the UPF 133, or may include PDR, usage reporting rule (URR) in the N4 rule and transmit the same in operation 305.

The N4 rule is a rule that the SMF 132 transfers to the N4 reference point in order to handle the user plane packet of the UPF 133, and may include PDR, forwarding action rules (FARs), and usage reporting rules (URRs), QER, and session reporting rules (SRRs). The SMF 132 may transmit or update the N4 rule to the UPF 133 through an N4 session creation/update/delete message. The PDR in the N4 rule delivered by the SMF 132 to the UPF 133 may include information that may detect packets such as IP packet filter, terminal IP address, and application identifier QoS Flow ID. FAR in the N4 rule may include information including whether the packet is buffered or dropped, forwarding, encapsulation/decapsulation, and forwarding destination. QER within the N4 rule may define a marking operation for packets for the purpose of limiting the maximum transmission rate or providing QoS. QER may include information such as information on QoS-related operations to be performed by the UPF 133 when the UPF 133 receives a packet matching the PDR, for example, information on whether to pass or stop the flow, maximum transmission rate to be applied to UL/DL packets, guaranteed bit rate for UL/DL packets, DL flow level marking, QoS flow ID. URR is a rule that defines how to report aggregated or measured information about user plane packets, and may include, for packets matching the PDR, information such as a trigger event to be reported, triggers that report periodic measurement information, e.g. specific times of the day, thresholds for the amount of data transmitted/received (i.e., byte-count) for UL/DL traffic, reporting time, inactivity detection time.

FIG. 3 illustrates a case of having different QoS flows when one UE 120 communicates with one AS 161. That is, a case where there are a flow corresponding to QoS Flow 1 (311) and a flow corresponding to QoS Flow 2 (312) between the UE 120 and the AS 161 is illustrated.

In addition, a case where one tunnel may be formed between the UPF 133 and the UE 120 for QoS Flow 1 (311), and a case where another tunnel may be formed between the UPF 133 and the UE 120 for QoS Flow 2 (312) are illustrated in the drawing.

Accordingly, the UE 120 may filter packets according to QoS rules. In addition, the RAN 110 may provide each application traffic to the UE 120 through the corresponding tunnel based on the QoS Profile.

Meanwhile, the UPF 133 may detect service traffic with different QoS of the packets transmitted and received between the specific AS 161 of the IP data network 160 and the UE 120 based on the N4 rule, PDR, and QER. In other words, application traffic may be detected through a traffic pattern determined by the application identifier or through deep packet inspection. This application traffic detection method requires separate high-specification/expensive equipment that requires complex operations for each application traffic, and has the inconvenience of having to define the packet detection operation corresponding to the application identifier in advance.

In the disclosure, techniques for providing a method and apparatus for resolving such problems will be described below.

In the disclosure, a method for detecting traffic and applying QoS by introducing an SDF-based template that can detect traffic based on FQDN and apply QoS is proposed.

The main technical feature of the disclosure is that when the SMF of 5GC receives an FQDN-based SDF, the SMF converts the FQDN to IP through the edge application server discovery function (EASDF) and then delivers the N4 rule.

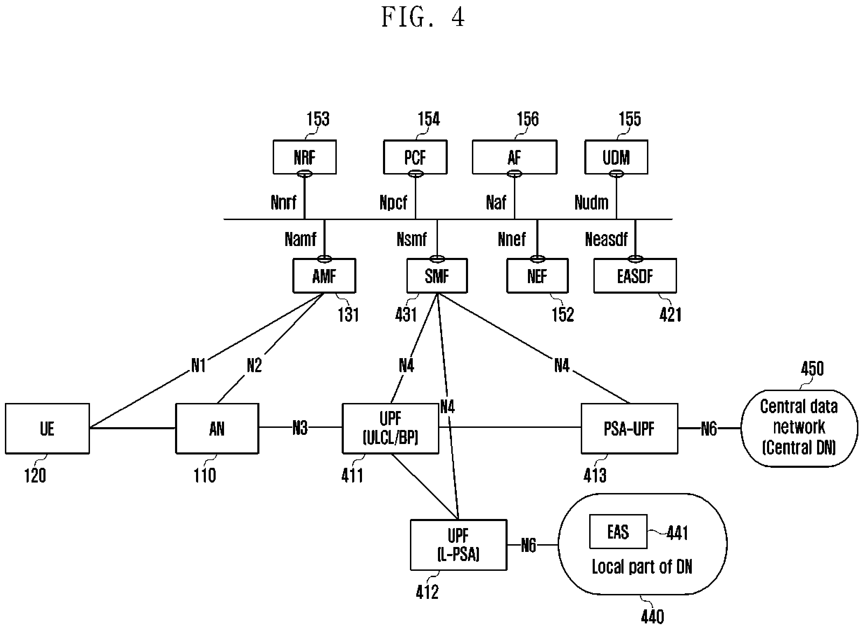

FIG. 4 is a diagram illustrating a corner network constitution and DN connection of a 5G system to which the disclosure is applied.

In FIG. 4, respective NFs using the same reference numerals as in FIG. 1 may be the NFs that perform the same operation as in FIG. 1. In addition, even if the same reference numerals as in FIG. 1 are used, additional operations according to the disclosure may be further performed in case where additional operations are described in the drawings described later.

In addition to the NFs described in FIG. 1, additionally illustrated NFs and their operations will be described.

Comparing FIG. 4 with FIG. 1, only one UPF 133 is illustrated in FIG. 1, but three different UPFs 412, 412, and 413 are illustrated in FIG. 4. First, the UPF 411, which is directly connected to the AN 110, may operate as an uplink classifier, branching point (UL-CL BP). The UPF 411 may be connected to the UPF (PSA-UPF) 413 that operates as a PDU session anchor (PSA) connected to a central data network (central DN) 450. In addition, the UPF 411 may be connected to the UPF 412, which operates as a local PSA connected to the local part of the DN 440.

In addition, according to the disclosure, the edge application server discovery function (EASDF) 421 may be an NF that may add an enhanced domain name system (EDNS) client subnet (ECS) option, which may be marked as the address of the DNS server that will forward the terminal's DNS request, and the IP subnet address that must be added when forwarding the terminal's DNS request, for each fully qualified domain name (FQDN). The EDNS client subnet (ECS) option is information added by the EASDF 421 to inform the DNS server of the location information of the terminal. The EASDF 421 may configure the value of the ECS option in the information included in the DNS message handling rule from the SMF 431 or determine whether the ECS option is included in the DNS Query message transmitted by the terminal to the EASDF 421 and the value of the ECS option through information such as information (e.g., DNAI) included in the DNS message handling rule. The format of the ECS option is marked as information that can identify the subnetwork of the IP network, including the IP network address and subnet length, such as 10.10.0.0/24. The DNS server that has received the ECS option may respond by including in the DNS Response message the IP address of a server that corresponds to the ECS option or is located topologically nearby, among the IP addresses corresponding to the FQDN requested in the DNS Query.

The EASDF 421 may be an NF that performs functions to receive the terminal IP address, location information of the terminal within 3GPP, DNS message handling rule, and DNS message reporting rule from the SMF 431, handle the DNS Query message received from the terminal and the DNS Response message received from the DNS server (not shown in FIGS. 1 and 4), and transmit the information in the DNS message and the handled statistical information to the SMF 431 in accordance with the DNS message reporting rules.

The EASDF 421 may perform the EAS discovery function. The EASDF 421 is connected to SMF 431. The EASDF 421 may receive a DNS message handling rule for the session level and node level from the SMF 431. The EASDF address may be used as the DNS address delivered to the terminal as the PCO when generating or changing a PDU session. The EASDF 421 may perform the following functions.
(1) It may register with the NRF 153 for discovery and selection of the EASDF 421.
(2) The DNS messages may be handled according to instructions received from the SMF 431. The DNS messages being handled may include the following functions.

1) DNS message handling rules may be received from the SMF 431.
2) DNS messages may be transmitted to and received from the terminal.
3) The DNS Query message received from the terminal may be delivered to a centralized domain name system (C-DNS) server or local DNS server.
4) The enhanced domain name system (EDNS) client subnet (ECS) option may be added depending on the FQDN included in the DNS Query.
5) When receiving a DNS Query or response, related information may be reported to the SMF 431.
6) The DNS Response message may be discarded from the DNS server.

The EASDF 421 has a user plane connection on an N6 via PSA-UPF 413 to exchange DNS messages with the terminal.

To help understand the EASDF 421, the operation of EAS discovery by the terminal through the EASDF 421 is described as follows.
(1) In the process of generating a PDU session, the SMF 431 receives EAS deployment information from the PCF 154 through PDU session-related policy information. The SMF 431 may select the EASDF 421 and provide the address of the EASDF 421 by configuring it as a DNS server address to the terminal during the PDU session creation process.
(2) The terminal that has received the EASDF address as the DNS server address during the PDU session creation process may be configured to transmit the DNS Query to the DNS server, that is, the EASDF 421, in order to obtain an IP address for future traffic.
(3) The SMF 431 may generate a DNS message handling rule for handling the DNS messages associated with the terminal and deliver the rule to the EASDF 421. The DNS message handling rule includes a unique identifier and information for detecting an DNS message and performing related actions. Such information is as follows.

1) DNS message handling rule priority
2) DNS handling rule identifier
3) DNS message detection format (template). The DNS message detection format may include at least one of the followings.

In case where the DNS message type is DNS Query, a sender IP address (i.e., terminal IP address), a plurality of FQDN ranges, a node-level message handling template identifier

In case where the DNS message type is DNS Response, a FQDN range or EAS IP address ranges, a Node-level message handling template identifier

When a packet matching the DNS message detection template within the DNS message handling rule is detected, the action indicating the function performed by the EASDF 421 may include the following contents.
1) The FQDN and IP address included in the received DNS message may be reported to the SMF 431.
2) The DNS messages may be buffered.
3) Reporting-once indication. In case where this indication is included and the DNS Query or DNS Response message matches the DNS message detection template, the DNS message content is reported to the SMF 421 only once.
4) The DNS messages may be delivered to the DNS server.
5) In case where the DNS message handling rule includes the EDNS client subnet option, the EDNS client subnet option may be included.
6) The destination address of the DNS message may be changed to the address received in the DNS message handling rule and forwarded, or forwarded to a preconfigured DNS server address.

In addition, each of the UPFs 411, 412, and 413 may be connected to the SMF 431. The SMF 431 generates and provides the DNS message handling rule for the EASDF 421, and in case where the terminal transmits a DNS Query matching the FQDN, the EASDF 421 may generate the DNS message handling rule such that the DNS message is detected and reported to the SMF 431.

The reference point with the EASDF 421 may be defined as follows.
- Nx: reference point between the SMF 105 and the EASDF 421 (not shown in FIG. 1)
- Ny: reference point between the NEF (EDF) 111 and the EASDF 41 (not shown in FIG. 1)

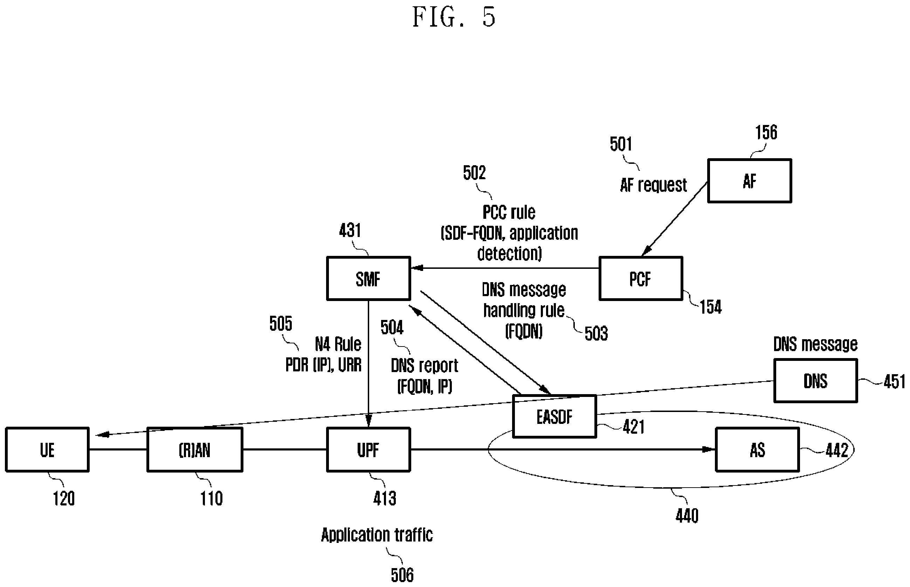

FIG. 5 is an example diagram for describing an application traffic detection operation using an FQDN-based SDF template according to an embodiment of the disclosure.

Before referring to FIG. 5, respective NFs shown in FIG. 5 will be described using the NFs illustrated in FIG. 4. However, the DNS 451 has been further added as an NF not illustrated in FIG. 4, and a case of further including the AS 442 is illustrated. Since the DNS 451 follows what is described with respect to FIGS. 1 and 4, further description will be omitted. In addition, the AS 442 may be the same as the EAS 441 in FIG. 4 or may be a different AS. In FIG. 5, for generalization, it may be illustrated as the AS 442 rather than the EAS 441.

In addition, in the specification, a UE and a terminal may be used interchangeably for description, and this may be the UE 120 illustrated in the drawing.

The AF 156 may provide an AF request message to the PCF 154 in operation 501.

The PCF 154 may transmit a PCC rule based on the AF request message in operation 502. In this case, the PCC rule may include an FQDN-based SDF template (FQDN-SDF) and application detection information according to the disclosure.

The SMF 431 may receive the PCC rule including FQDN-SDF and application detection information from the PCF 154 as a traffic identification rule. Thereafter, in case where the SMF 431 detects an FQDN-based SDF template and application traffic matching the template from the PCF 154, the SMF 431 may transmit a DNS message handling rule to the EASDF 421. The DNS message handling rule may include FQDN information. More specifically, the SMF 431 may generate a DNS message handling identification template based on the FQDN range information extracted from the FQDN-SDF received from the PCF 154 and transmit it to the EASDF 421. The DNS message handling rule transmitted to the EASDF 421 may include a request for the EASDF 421 to report to the SMF 431 when receiving a DNS Response message.

Thereafter, in case where a DNS message exchange for the corresponding FQDN of the terminal occurs, the EASDF 421 may include the IP address for the corresponding FQDN along with the FQDN information in the DNS reporting message and report the same to the SMF 431. After receiving a report that the DNS message exchange has occurred from the EASDF 421, the SMF 431 may generate a corresponding N4 rule and transmit it to the UPFs 413, 412, and 411 in operation 505. The N4 rule transmitted by the SMF 431 in operation 505 may include PDR including an IP packet rule corresponding to the FQDN and URR where application traffic reports the start of detection in order detect application traffic with an IP address corresponding to the FQDN detected in the N4 rule delivered to the PSA-UPF 413. The SMF 431 may transmit the N4 rule to the Local UPF 412.

Thereafter, in case where the UPF 413 detects traffic to the IP address corresponding to the FQDN from the terminal in operation 506, it may report the detection to the SMF 431 (not shown in FIG. 5). Accordingly, the SMF 431 may detect application traffic matching the FQDN SDF template and perform a report on the request to the PCF 154 (not shown in FIG. 5).

The description focusing on the operation of the EASDF 421 that has received the DNS message handling rules is as follows.

When the EASDF 421 receives the DNS message handling rule transmitted by the SMF 431, the EASDF 421 may identify whether the DNS message handling rule is met by examining the DNS Query message transmitted by the terminal. Alternatively, the SMF 431 may forward the DNS message transmitted by the terminal to the DNS server.

When the DNS server 451 replies with a response message, the EASDF 421 may receive the response message and identify whether the FQDN and its IP address are included in the DNS message detection template included in the DNS message handling rule received from the SMF 431. Further, in case where it matches the FQDN range delivered by the SMF 431, the EASDF 421 may report the FQDN and IP included in the DNS message to the SMF 431.

The SMF 431 may obtain an IP address for the FQDN included in the DNS report message received from the EASDF 421. The SMF 431 may generate an IP-based PDR rule with an IP address corresponding to the FQDN. In the case of uplink traffic, the IP address corresponding to the FQDN corresponds to a destination address and may be converted to the destination address, and in the case of downlink traffic, the IP address corresponds to a value corresponding to a transmitter address and may be converted to the transmitter address.

In case where the PCC rule requests application detection, the SMF 431 may generate PDR and URR and transmit them to the PSA-UPF 413 or Local UPF 412 (not shown in FIG. 5).

The terminal 120 may receive the DNS Response message forwarded by the EASDF 421 and obtain an IP address for the FQDN requested by the terminal 120. The IP address acquired by the terminal 120 may be the same IP address reported by the EASDF 421 to the SMF 431. The terminal 120 may transmit an application layer message requesting initiation of an application layer session, for example, a SYN message for generating a TCP session, to the acquired IP address of the server.

The application layer message transmitted by the terminal 120 matches the SDF template transmitted by the SMF 431 in the UPF 413, and the UPF 413 may perform a reporting procedure for the detected traffic. The SMF 431 may receive reports from the UPF 413. In case where the SMF 431 reports on the corresponding traffic according to the PCC rules, the SMF 431 may report this to the PCF 154.

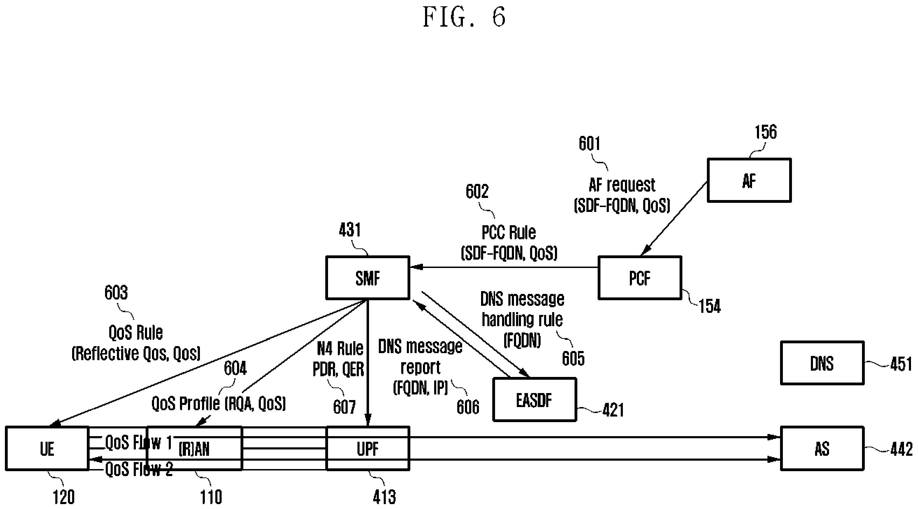

FIG. 6 is an example diagram for describing a QoS and charging control method using an FQDN-based SDF template according to another embodiment of the disclosure.

Respective NFs in FIG. 6 correspond to the NFs described with respect to FIG. 5. Therefore, redundant description will be omitted, and the operations of respective NFs will be described according to the signal flow in FIG. 6. Also, in FIG. 6, a terminal and a UE may be used interchangeably for description, and both the UE and the terminal may be the UEs illustrated in the drawing.

With reference to FIG. 6, the AF 156 may transmit an AF request message to the PCF 154 in operation 601. The AF request message may include an FQDN-based SDF template (SDF-FQDN) and QoS information according to the disclosure.

The PCF 154, which has received the AF request message including the SDF-FQDN and QoS information, may generate a PCC rule including the SDF-FQDN and QoS information, and transmit the PCC rule to the SMF 431 in operation 602.

The SMF 431 may receive the PCC rule including the SDF-FQDN and QoS information from the PCF 154, and then, generate a QoS rule, and transmit the generated QoS rule to the UE 120. The QoS rule may include reflective QoS information and QoS information.

In addition, the SMF 431 may transmit the QoS profile to the RAN 110 in operation 604. The QoS profile may include reflective QoS attribute (RQA) information and QoS information. The QoS profile information delivered by the SMF 431 to the RAN 110 may include the following information.
- 5G QoS identifier
- allocation and retention priority (ARP)
- reflective QoS attribute (RQA): RQA is a parameter that indicates that some traffic delivered to this QoS Flow may fall under reflective QoS. The RAN, which has received the QoS profile including this characteristic value, allocates wireless network resources on which the reflective QoS indication (RQI) may be transmitted to wireless network resources for the corresponding QoS flow.
- UL/DL guranteed flow bit rate(GFBR)
- maximum flow bit rate (MFBR)
- notification control
- UL/DL maximum packet loss rate

In addition, after receiving the FQDN-based SDF template from the PCF 154 and the PCC rule requesting QoS application to the traffic matching the template, the SMF 431 may transmit the DNS message handling rule to the EASDF 421 in operation 605. The DNS message handling rule may include FQDN information according to the disclosure.

Thereafter, in case where a DNS message exchange for the corresponding FQDN of the terminal 120 occurs, the EASDF 421 may report the IP address for the corresponding FQDN to the SMF 431. After receiving a report that the DNS message exchange has occurred from the EASDF 421, the SMF 431 may generate an N4 rule using the PCC rule previously received from the PCF 154 and the IP address information received from the EASDF 421, and transmit the generated N4 rule to the UPF 413 in operation 607. The N4 rule may include PDR and QER.

Thereafter, in case where traffic to the IP address corresponding to the FQDN is detected from the terminal 120, the UPF 413 may perform an operation of applying the corresponding QoS or mapping to the corresponding QoS flow identifier (QFI).

After the SMF 431 receives a report from the EASDF 421 that it has detected DNS traffic for the FQDN, in case where the PCC rule received from the PCF 154 provides a policy for QoS, the SMF 431 may generate the PDR rule, QER rule, forwarding enforcement rule (FER), or QER and FER rules, and deliver them to the UPF 413.

The application layer message transmitted by the terminal 120 becomes to match the IP-based PDR transmitted by the SMF 431 in the UPF 413, and the UPF 413 may apply a QoS policy to the detected traffic. The meaning of applying a QoS policy may include a series of QoS-related operations, including enforcement of the maximum bitrate instructed by QER, and a series of processes for mapping to the QFI indicated by forwarding action rules (FARs), marking the header information including the QFI specified in the GPRS tunneling protocol (GTP) header, and transmitting the traffic to the RAN 110. In addition, in case of receiving a packet corresponding to a QoS flow to which reflective QoS is applicable, the QoS process may include an operation of marking a reflective QoS indication (RQI) bit in the GTP header in an in-band manner and transmitting the same to the RAN 110.

The terminal 120 may receive the DNS Response message forwarded by the EASDF 421 and obtain an IP address for the FQDN requested by the terminal 120. The IP address obtained by the terminal 120 may be the same IP address as the IP address reported by the EASDF 421 to the SMF 431. The terminal 120 may transmit an application layer message requesting initiation of an application layer session, for example, a SYN message for generating a TCP session, to the obtained IP address of the server.

In FIG. 6, as previously described with respect to the conventional art, different QoS Flows may be provided to the UE 120 through the UPF 413. For example, when one UE 120 communicates with one AS 442, it may have different QoS Flows or may have different QoS Flows from different ASs. In the disclosure, different QoS flows may be provided from the same AS or may be QoS flows provided from different ASs.

In addition, as described above, the drawing illustrates that different tunnels may be formed between the UPF 413 and the UE 120 for each QoS Flow.

The advantage of the method described in FIGS. 5 and 6 in the disclosure over the existing IP-based SDF template is that it is suitable for a content delivery network (CDN) environment or edge computing environment where the IP address of the server changes dynamically.

In addition, the advantages compared to the DPI method described above are as follows. The method according to the disclosure is very simple as it does not detect traffic patterns. In addition, a plurality of services with the same traffic pattern may be identified by FQDN. Accurate traffic detection is possible even for encrypted traffic. In addition, it has the advantage of being accurate because it is applied to the exact IP address that the terminal will use.

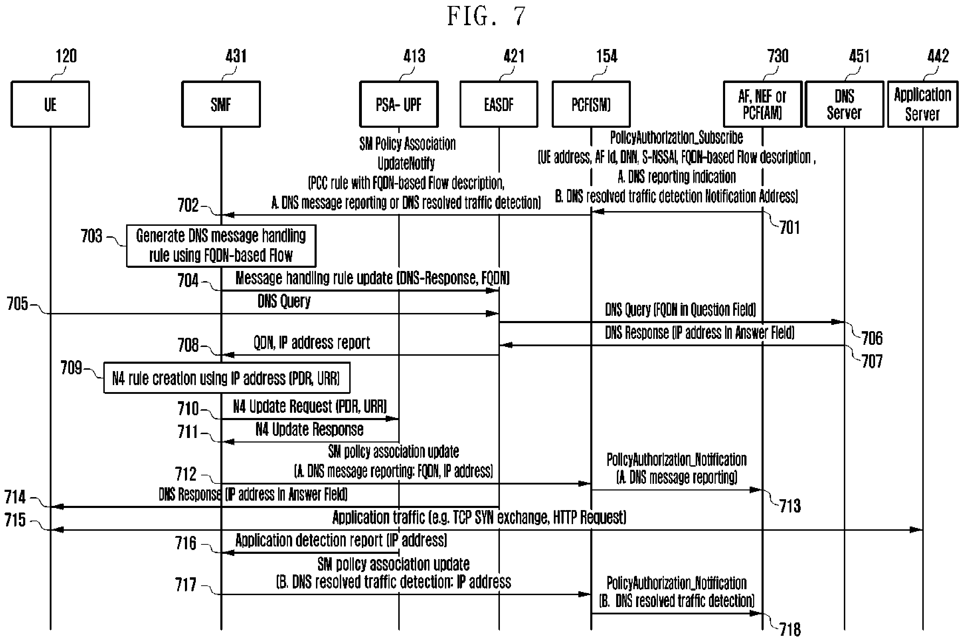

FIG. 7 is an example diagram for describing a procedure for detecting traffic using an FQDN-based SDF template according to an embodiment of the disclosure.

FIG. 7 described below has the same concept as FIG. 5 described above and is an example diagram for describing a more detailed procedure than that in FIG. 5. That is, FIG. 7 may be an example diagram for describing a procedure in a case where the SMF receives a traffic detection filter marked as an FQDN SDF through a PCC rule.

In describing FIG. 7, NFs will be described using the NFs described with respect to FIGS. 4 to 6 described above. However, it should be noted that in the case where the NF is at least one of a plurality of NFs rather than a specific NF, a separate reference numeral is used. For example, in FIG. 7, the AF, NEF, or PCF(AM) will be described with reference numeral 730, and may be an operation of at least one NF among them. However, in the following description, in case where reference numeral 730 is used for convenience of explanation, only one representative NF may be illustrated. For example, in case where it is assumed to be an AF operation, it will be described as AN 730, and in case where it is assumed to be an NEF operation, it will be described as an NEF 730.

In operation 701, the AF 730 may transmit a policy authorization subscription (PolicyAuthorization_Subscribe) request message to the PCF(SM) 154. The policy authorization subscription request message may include an FQDN-based SDF template. The FQDN-based SDF template may be included in the message in which the AF 730 requests traffic detection, and may include the FQDN or FQDN range.

In operation 702, the PCF(SM) 154 may deliver an SM policy association update notify message to the SMF 431. The message delivered by the PCF 154 to the SMF 431 may include PCC information. The PCC may include an SDF and may also include an FQDN-based SDF proposed in the disclosure. The FQDN-based SDF template proposed in the disclosure may include the following contents.

The FQDN-based SDF template may include a plurality of FQDNs or FQDN ranges that may refer to a plurality of application servers or a group of application servers included in one service. The FQDN ranges may be expressed as regular expressions.

For example, it may be expressed as follows.
FQDN e.g.: abc.asp1.com
FQDN list: abc.asp1.com, abcd.asp1.com
FQDN range expressed as a regular expression, e.g.: *.asp1.com or ab*.service.com *.svc.asp1.com
EASDF resolution indication (or DNS resolution indication)

Even if the SDF is written based on the FQDN, the SMF 431 may operate in a way that does not perform IP resolution for the EASDF 421, so the PCF (SM) 154 may use a separate indication in order to explicitly indicate the case of performing IP address resolution to FQDN through the EASDF 421, which transmits and receives DNS messages to the DNS address configured in the terminal 120. This separate indication may be referred to as "EASDF-resolution indication". The corresponding indication may also be denoted by other names such as EASDF resolution indication or DNS resolution indication. It may be understood that this indication means that the PCF 154 explicitly indicates to the SMF 431 that the FQDN specified in the SDF template identifies traffics using IP information received from a server that transmits and receives messages to and from the terminal 120.

Alternatively, even in case where the EASDF resolution (or DNS resolution indication) is not explicitly included in the message that the PCF 154 delivers to the SMF 431, in case where the type of the SDF template is marked in a format that refers to the FQDN or FQDN group, it may be understood that the SMF 431 instructs to perform an operation to identify traffics for the IP address corresponding to the FQDN through the transmission and reception of DNS messages of the terminal 120 using the EASDF 421.

In case where the DNS message (DNS Query or DNS Response message) included in the FQDN list or FQDN range is detected, the PCF(SM) 154 may include an indication requesting a report on this in the PCC rule and deliver the same to the SMF 431. In this case, the PCF (154) may deliver a more specific rule to the SMF 431 to report the case where the DNS Query or DNS Response message corresponding to the FQDN is detected. This may be a case corresponding to A. DNS message reporting among the cases illustrated in operation 702 in FIG. 7.

In case where application traffic matching the SDF template corresponding to the FQDN is detected, the PCF(SM) 154 may request a report for this case. This may correspond to B. DNS resolved traffic detection among the cases illustrated in operation 702 in FIG. 7.

The FQDN-based SDF template may be used to detect service data flow. The SDF template may be an application identifier that refers to the SDF filter or application detection filter. The SMF 431 may map the SDF template included in the PCC rule to the PDR in operation 703. In case where the SDF is the FQDN-based SDF, the SMF 431 may generate PDR using a DNS reporting message. To this end, the SMF 431 may generate a DNS message handling rule and transmit it to the EASDF 431. The generated DNS message handling rule may include an action rule instructing the SMF 431 to report when receiving the DNS Response message corresponding to the FQDN and FQDN included in the FQDN SDF.

In operation 704, the SMF 431 may perform a procedure to update the DNS message handling rule to the EASDF 421. The DNS message handling rule transmitted from the SMF 431 to the EASDF 421 may include the following information.
(1) DNS handling rule identifier: A uniquely identifiable identifier of the DNS message handling rule.
(2) DNS message handling rule priority: This is an indication that may specify the priority of DNS handling rules identified by the DNS handling rule identifier.
(3) DNS message detection template: The DNS message detection template specifies a condition for detecting whether the DNS message received from the terminal or the DNS message received from the DNS server is DNS traffic to which the DNS handling rule must be applied. The template may include at least one of the following contents.

1) In case where the DNS message type is DNS Query, a sender's IP address (i.e., the terminal's IP address), a plurality of FQDN ranges, and node-level message handling template identifier
2) In case where the DNS message type is DNS Response, FQDN range or EAS IP address range, node-level message handling template identifier

The actions included in DNS message handling rules may include the following.
(1) Content instructing to report the FQDN and IP address included in the received DNS message to the SMF 431
(2) Content instructing to buffer the DNS message
(3) Reporting-once indication. In case where this indication is included, in case where the DNS Query or DNS Response message matches the DNS message detection template, the DNS message content is reported to the SMF 431 only once.
(4) Content instructing to deliver the DNS message to the DNS server
(5) In case where the EDNS client subnet option is included in the DNS message handling rule, content instructing to include the EDNS client subnet option
(6) Content instructing to change the destination address of the DNS message to the address received in the DNS message handling rule and forward it or to forward it to a preconfigured DNS server address.

In operation 704, the SMF 431 may perform a procedure to update the DNS message handling rules to the EASDF 421. In the embodiment, the SMF 431 may generate a DNS message handling rule to receive a report of an IP address for FQDN information corresponding to the FQDN-SDF template received from 702. The DNS message handling rule may include the FQDN range information included in the FQDN-SDF received in operation 702, information corresponding to the DNS Response message, DNS message handling rule identifier, and, in case where the DNS message is identified, an action rule for handling an DNS message requesting reporting on this identification, and, if necessary, reporting-once indication.

The SMF 431 may transmit the DNS message handling rule to the EASDF 421 in operation 704. In case of receiving a Notify message from the EASDF 421 in the future, according to the DNS message rule generated by the PCC rule, the SMF 431 may record the mapping information between the identifier of the message handling rule to be generated and the PCC rule in order to identify the original PCC rule. The SMF 431, which has received the Notify message from the EASDF 421 in operation 708, may also receive the DNS message handling rule identifier. From this, in operation 709, the SMF 431 may obtain the PCC rule for generating the N4 rule from the mapping information with the DNS message handling rule identifier.

In another embodiment, the SMF 431 may include reference information about the PCC rule (e.g., a PCC rule identifier) in the DNS message handling rule such that the EASDF 421 reports and transmit the same. In case where the corresponding DNS message is identified, the EASDF 421 may further include reference information about the requested PCC rule in the report message and transmit the same.

In addition, after performing operation 704, the SMF 431 may prevent the terminal 120 from using the DNS record cached in the terminal DNS client for the FQDN included in the FQDN-SDF template, and include an EAS rediscovery indication or EAS rediscovery indication, and an FQDN list or FQDN range, together with the PDU session change command and transmit the same to the terminal 120 such that the EASDF 421 detects this prevention.

The EASDF 421, which has received the DNS message handling rule in operation 704, may store the DNS message handling rule and perform operations according to the DNS message handling rule for a DNS message that arrives in the future.

In operation 705, in order to deliver application traffic from the application program of the terminal 120 to the application server, a request from the application program to perform IP address resolution of the FQDN of the application server may be delivered to the DNS client (not shown in the drawing) in the terminal 120. In the DNS client of the terminal 120, when generating a PDU session or changing a PDU session, the address of the EASDF 421 received from the SMF 431 may be configured to the DNS server address. Accordingly, the DNS client of the terminal 120 may deliver the DNS Query message to the EASDF 421. The IP sender address included in the IP header of the DNS Query message may be configured to the IP address of the terminal, the IP receiver address may be configured to EASDF, the DNS type may be configured to DNS Query. The FQDN of the application server requested by the application of the terminal 120 may be included.

In operation 706, the EASDF 421 may receive the DNS Query message transmitted by the terminal 120, and identify whether it matches the DNS message detection template included in the DNS message handling rule received in operation 704. For convenience of explanation, in this example, the DNS Query message may be forwarded to the DNS server 451 according to the handling rules of the EASDF 421.

In operation 707, the DNS server 451 may receive the DNS Query and transmit a DNS Response message for the requested FQDN to the EASDF 421. The DNS Response message may include information about the IP address for the requested FQDN.

In operation 708, the EASDF 421 may receive the DNS Response message in operation 707 and identify whether it matches the contents included in the DNS message detection template included in the DNS message handling rule received in operation 704. In this example, it is assumed that the FQDN Range is included in the DNS response message in operation 704. In case where the DNS Response message received in operation 707 includes a response to the FQDN included in the FQDN Range received in operation 704, the EASDF 421 may perform a procedure of reporting the contents of the DNS message to the SMF 431 according to the DNS message handling rule.

The report message that the EASDF 421 transmits to the SMF 431 may include the FQDN requested by the terminal 120 in operation 705 and IP address information resolution to the FQDN requested by the DNS server 451. The message included in the report may include the DNS message handling rule identifier or node-level message handling template identifier, which is information for the SMF 431 to identify the corresponding rule.

The SMF 431, which has received the Notify message from the EASDF 421, may receive the DNS message handling rule identifier. From this, in operation 709, the SMF 431 may obtain the PCC rule for generating the N4 rule from the mapping information between the PCC rule and DNS message handling rule identifier recorded in operation 704.

In operation 709, in case where the SMF 431 transmits the DNS message based on the FQDN-based SDF template and receive the DNS message report for this, the SMF 431 may generate the N4 rule corresponding to the PCC rule received in operation 702.

For example, in case where the PCC rule for application detection is received in operation 703, the SMF 431 may generate a PDR rule including the IP address received in operation 708, and generate a URR to report the case of detecting traffics corresponding to the PDR rule and deliver the URR to the UPF 413.

In operation 710, the SMF 431 may deliver the generated N4 rule to the UPF 413. If the N4 rule generated by the SMF 431 is to perform an application traffic detection request, the SMF 431 may deliver the N4 rule including the corresponding PDR and URR to the UPF 413. The UPF 413 may be PSA-UPF, a packet session anchor.

The UPF 413, which has received the N4 rule in operation 711, may install a rule, and detect traffic corresponding to the PDR for packets received from the terminal 120 in the future or traffic heading to the terminal 120 from the DN (not shown in FIG. 7). In case of detecting the traffics corresponding to the PDR, the UPF 413 may report the detection to the SMF 431 using the rules included in the URR associated with the detection.

In operation 712, in case where a request for a DNS detection report (corresponding to A. DNS message reporting described in operation 702) has been received from the PCF (SM) 154 in operation 702, and the DNS traffic for the FQDN has been detected from the EASDF 421, the SMF 431 may deliver a packet detection report message including the corresponding FQDN and IP address to the PCF(SM) 154 through an SM policy association update message.

In operation 713, the PCF(SM) 154 may deliver the PolicyAuthorization Notification message to the Notification address received in operation 701 described above. The delivered content may include content (information) received from the PCF(SM) 154 in operation 712.

Meanwhile, in operation 714, the application program of the terminal 120 receives a DNS response. The terminal 120 may start an application layer session through the IP address for the FQDN received in the DNS response. The DNS response received by the application program of the terminal 120 may be, for example, a SYN message that initiates a TCP session. The destination address of the IP message through which the UPF 413 delivers the application layer message delivered by the terminal 120 to the application server 442 is the IP address received in the DNS Response message, and this destination IP address may be a message matching the PDR in operation 710. When the UPF 413 detects a message that matches the PDR rule, the UPF 413 may identify the corresponding URR and then perform the corresponding action. This Action may be reporting the corresponding IP to the SMF 431.

If an FQDN-SDF-based traffic detection report request (B) is received from the PCF (SM) 154 in operation 712 described above in operation 715, the SMF (431), which received the application detection report from the UPF (413), receives the application detection report from the PCF (154). Report messages can be delivered to. The report message may include the IP address for the FQDN received from EASDF 421.

In operation 716, the SMF (SM) 431 receives the FQDN-based SDF template and the corresponding traffic detection report request (B) in operation 712, and delivers the DNS message handling rules associated with this to the EASDF 421 in operation 703 described above. Then, a DNS message is detected and a corresponding N4 rule is generated to configure the UPF 413. In case of receiving, from the UPF 413, a report that the corresponding application traffic has been detected, the SMF 431 may deliver a report that a DNS resolved IP address has been detected to the PCF(SM) 154 requested in operation 702 (operation 717).

In operation 717, in case where the PCF(SM) 154 requests a report on FQDN-based application layer traffic detection along with the FQDN-based SDF template from the AF 730 in operation 701 described above, the PCF(SM) 154 may report this request to the requested Notification address (operation 718).

The contents according to the detailed flowchart of the disclosure described above are summarized as a whole from the perspective of the SMF 431 as follows.

The SMF 431 may receive the FQDN-SDF and PCC rule for application traffic detection in operation 702, and generate the DNS message rule including a DNS message detection template corresponding to the FQDN-SDF template and a report request for the same (operation 703), and may deliver the generated DNS message rule to the EASDF 421 (operation 704).

Thereafter, the DNS procedure for the FQDN corresponding to the FQDN-SDF template is performed by the terminal 120. In case where the EASDF 421 detects a DNS message that matches the DNS message handling rules, the SMF 431 may receive an IP address for an FQDN matching the FQDN-SDF template from the EASDF 421 (operation 708), generate a PDR corresponding to the IP address included in the received message, and generate a URR from the PCC rule and deliver the URR to the UPF 413 (operation 710).

Thereafter, when application layer traffic occurs from the terminal 120 and the UPF 413 detects application traffic corresponding to the PDR, it may be reported to the SMF 431 according to the reporting rule (operation 715), and the SMF 431, which has received the report, may report traffic detection using the EASDF 421 to the PCF(SM) 154 according to the PCC rules (operation 716).

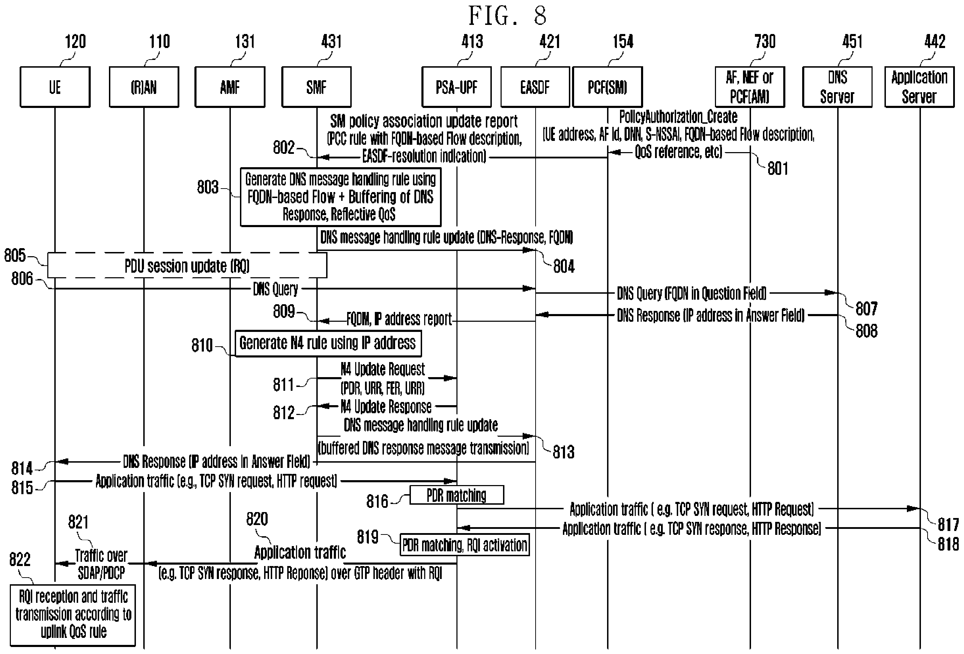

FIG. 8 is an example diagram for describing a procedure for detecting traffic using an FQDN-based SDF template according to another embodiment of the disclosure.

FIG. 8 described below has the same concept as FIG. 6 described above and is an example diagram for describing a more detailed procedure than that in FIG. 6. That is, FIG. 8 may be an example diagram for describing a procedure in a case where the SMF receives a traffic detection filter marked as an FQDN SDF through a PCC rule.

In describing FIG. 8, NFs will be described using the NFs described with respect to FIGS. 4 to 6 described above. However, it should be noted that in the case where the NF is at least one of a plurality of NFs rather than a specific NF, a separate reference numeral is used. For example, in FIG. 7, the AF, NEF, or PCF(AM) will be described with reference numeral 730, and may be an operation of at least one NF among them. However, in the following description, in case where reference numeral 730 is used for convenience of explanation, only one representative NF may be illustrated. For example, in case where it is assumed to be an AF operation, it will be described as an AN 730, and in case where it is assumed to be an NEF operation, it will be described as an NEF 730.

In operation 801, the AF 730 may transmit a policy creation request message to the PCF(SM) 154. The policy creation request message may include an FQDN-based SDF template. The FQDN-based SDF template may include an FQDN or FQDN range to identify traffic requested by the AF 730. The policy creation request message requested by the AF 730 may include a request to apply routing, QoS, or charging to traffic corresponding to the FQDN-based SDF template.

In operation 802, the PCF(SM) 154 may deliver an SM policy association update report message to the SMF 431. The message delivered by the PCF 154 to the SMF 431 may include PCC information. The PCC information may include SDF. The PCC information may include the FQDN-based SDF proposed in the disclosure. The FQDN-based SDF template proposed in the disclosure may include the following contents.

The FQDN-based SDF template may include a plurality of FQDNs or FQDN ranges that may refer to a plurality of application servers or a group of application servers included in one service. The FQDN ranges may be expressed as a regular expression.

For example, it may be expressed as follows.
FQDN, e.g.: abc.asp1.com
FQDN list: abc.asp1.com, abcd.asp1.com
FQDN range expressed as a regular expression, e.g.: *.asp1.com or ab*.service.com *.svc.asp1.com
EASDF resolution indication (or DNS resolution indication)

Even if the SDF is written based on the FQDN, the SMF 431 may operate in a way that does not perform IP resolution for the EASDF 421, so the PCF (SM) 154 may use a separate indication in order to explicitly indicate the case of performing IP address resolution to FQDN through the EASDF 421, which transmits and receives DNS messages to the DNS address configured in the terminal 120. This separate indication may be referred to as "EASDF-resolution indication". This separate indication may also be denoted by other names such as EASDF resolution indication or DNS resolution indication. It may be understood that this indication means that the PCF 154 explicitly indicates to the SMF 431 that the FQDN specified in the SDF template identifies traffics using IP information received from a server that transmits and receives messages to and from the terminal 120.

The PCF(SM) 154 may receive the policy creation request message received in operation 801 and determine a PCC rule.

The PCC rule may include the following information.
(1) PCC rule identifier
(2) SDF template: FQDN based SDF template
(3) Charging-related information: Information identifying charging keys, and charging methods such as online/offline, etc.
(4) Service identifier: An identifier that identifies the service associated with the SDF template.
(5) ASP identifier: Identifier that identifies an application service provider
(6) Gate state information: Information that controls whether the traffic detected by the SDF template may pass through the UPF (e.g., Gate is open or closed)
(7) QoS related information

1) 5GI (5G QoS Identifier): QoS identifier allowed for SDF
2) QoS notification control indication
3) Reflective QoS control indication: Indication indicating whether reflective QoS is applied to SDF
4) UL/DL maximum allowed data rate, UL/DL guaranteed bitrate
5) allocation and retention priority (ARP)

The FQDN-based SDF template may be used to detect service data flow. The SDF template may be an application identifier that refers to the SDF filter or application detection filter. The SMF 431 may map the SDF template included in the PCC rule to the PDR in operation 803. In case where the SDF is the FQDN-based SDF, the SMF 431 may generate PDR using a DNS reporting message to the EASDF 421. To this end, the SMF 431 may generate a DNS message handling rule and transmit the generated DNS message handling rule to the EASDF 421. The generated DNS message handling rule may include an action rule instructing the SMF 431 to report when receiving the DNS Response message corresponding to the FQDN and FQDN included in the FQDN SDF.

In operation 804, the SMF 431 may perform a procedure to update the DNS message handling rule to the EASDF 421. The DNS message handling rule transmitted from the SMF 431 to the EASDF 421 may include the following information.
(1) DNS handling rule identifier: A uniquely identifiable identifier of the DNS message handling rule.
(2) DNS message handling rule priority: This is an indication that may specify the priority of DNS handling rules identified by the DNS handling rule identifier.
(3) DNS message detection template: The DNS message detection template specifies a condition for detecting whether the DNS message received from the terminal 120 or the DNS message received from the DNS server 451 is DNS traffic to which the DNS handling rule must be applied. The template may include at least one of the following contents.

In case where the DNS message type is DNS Query, a sender's IP address (i.e., the terminal 120's IP address), a plurality of FQDN ranges, and node-level message handling template identifier

In case where the DNS message type is DNS Response, FQDN range or EAS IP address range, node-level message handling template identifier

The actions for handling the DNS message by the EASDF 421 included in the DNS message handling rule may include the following contents.
(1) Content instructing to report the FQDN and IP address included in the received DNS message to the SMF 431
(2) Content instructing to buffer the DNS message
(3) Reporting-once indication. In case where this indication is included, in case where the DNS Query or DNS Response message matches the DNS message detection template, the DNS message content is reported to the SMF 431 only once.
(4) Content instructing to deliver the DNS message to the DNS server
(5) In case where the EDNS client subnet option is included in the DNS message handling rule, content instructing to include the EDNS client subnet option
(6) Content instructing to change the destination address of the DNS message to the address received in the DNS message handling rule and forward it or to forward it to a preconfigured DNS server address

In operation 804, the SMF 431 may perform a procedure to update the DNS message handling rule to the EASDF 421. In the embodiment, the SMF 431 may generate a DNS message handling rule to receive a report of an IP address for FQDN information corresponding to the FQDN-SDF template received in operation 802 described above. The DNS message handling rule may include the FQDN range information included in the FQDN-SDF received in operation 802, information corresponding to the DNS Response message, DNS message handling rule identifier, and, in case where the DNS message is identified, an action rule for handling an DNS message requesting reporting on this identification, and, if necessary, reporting-once indication.

The SMF 431 may transmit the DNS message handling rule to the EASDF 421 in operation 804. In case of receiving a Notify message from the EASDF 421 in the future, according to the DNS message rule generated by the PCC rule, the SMF 431 may record the mapping information between the identifier of the message handling rule to be generated and the PCC rule in order to identify the original PCC rule. The SMF 431, which has received the Notify message from the EASDF 421 in 808 in the future, may also receive the DNS message handling rule identifier. From this, in operation 909, the SMF 431 may obtain the PCC rule for generating the N4 rule from the mapping information with the DNS message handling rule identifier.

In another embodiment, the SMF 431 may include reference information about the PCC rule (e.g., a PCC rule identifier) in the DNS message handling rule such that the EASDF 421 reports and transmit the same. In case where the corresponding DNS message is identified, the EASDF 421 may further include reference information about the requested PCC rule in the report message and transmit the same.

In addition, after performing operation 804, the SMF 431 may prevent the terminal 120 from using the DNS record cached in the terminal DNS client (not shown in the drawing) for the FQDN included in the FQDN-SDF template, and include an EAS rediscovery indication or EAS rediscovery indication, and an FQDN list or FQDN range, together with the PDU session change command and transmit the same to the terminal 120 such that the EASDF 421 detects this prevention.

In operation 805, in case where the QoS information included in the PCC rule received in operation 802 described above includes reflective QoS, the SMF 431 may perform a PDU session update procedure. In the process of the SMF 431 performing the PDU session update procedure, the SMF 431 may transmit a reflective QoS attribute (RQA) to the QoS profile delivered to the RAN 110. The RAN 110, which has received the RQA, may establish a radio bearer with the terminal 120.

In case of applying the FQDN-SDF template, in order to prevent the overhead of control messages that modify the QoS rule of the terminal 120 every time traffic matching the FQDN is detected, reflective QoS may be used together in case where FQDN-SDF is used.

Meanwhile, the EASDF 421, which has received the DNS message handling rule in operation 804 described above, may store the DNS message handling rule and perform operations according to the DNS message handling rule for an DNS message that arrives in the future.

In order to deliver application traffic from the application program of the terminal 120 to the application server 442, a request from the application program to perform IP address resolution of the FQDN of the application server 442 may be delivered to the DNS client in the terminal 120. In the DNS client of the terminal 120, when generating a PDU session or changing a PDU session, the address of the EASDF 421 received from the SMF 431 may be configured to the DNS server address. The DNS client of the terminal 120 may deliver the DNS Query message to the EASDF 421 in operation 806. The IP sender address included in the IP header of the DNS Query message may be configured to the IP address of the terminal, the IP receiver address may be configured to EASDF, the DNS type may be configured to DNS Query. The FQDN of the application server 442 requested by the application of the terminal may be included.

In operation 806, the EASDF 421, which has received the DNS Query message transmitted by the terminal 120, may identify whether it matches the DNS message detection template included in the DNS message handling rule received in operation 804 described above. For convenience of explanation, this example is described assuming that the DNS Query message may be forwarded to the DNS server 451 according to the handling rule of the EASDF 421.

In operation 808, the DNS server 451 may receive the DNS Query and transmit a DNS Response message for the requested FQDN to the EASDF 421. The DNS Response message may include information about the IP address for the requested FQDN.

In operation 808, the EASDF 421 may receive the DNS Response message and identify whether it matches the contents included in the DNS message detection template included in the DNS message handling rule received in operation 804 described above. In this example, it is assumed that the FQDN Range is included in the DNS Response message in operation 804. In case where the DNS Response message received in operation 807 includes a response to the FQDN included in the FQDN Range received in operation 804, the EASDF 421 may perform a procedure of reporting the contents included in the DNS message to the SMF 431 according to the DNS message handling rule (operation 809).

In operation 809, the report message that the EASDF 421 transmits to the SMF 431 may include the FQDN requested by the terminal 120 in operation 806 described above and IP address information resolution to the FQDN requested by the DNS server 451. The message included in the report may include the DNS message handling rule identifier or node-level message handling template identifier, which is information for the SMF 431 to identify the corresponding rule, and transmit the same.

In operation 809, the SMF 431, which has received the Notify message from the EASDF 421, may receive the DNS message handling rule identifier. From this, in operation 810, the SMF 431 may obtain the PCC rule for generating the N4 rule from the mapping information between the recorded PCC rule and DNS message handling rule identifier recorded in operation 804 described above.

The SMF 431, which has transmitted the DNS message based on the FQDN-based SDF template in operation 804 above and has received the DNS message report for this in operation 809, may generate the N4 rule corresponding to the PCC rule received in operation 802 (operation 810).

For example, in case where the PCC rule for QoS control is received in operation 802 described above, the SMF 431 may generate a PDR rule including the IP address received in operation 809. In case of detecting the traffic corresponding to the PDR rule, the SMF 431 may establish received QER as the PCC rule.

In addition, N4 rules such as FER, QER, and URR necessary to perform functions such as gate control, charging policy application, and traffic forwarding received from the PCF 154 may be generated.

In operation 811, the SMF 431 may deliver the generated N4 rule to the UPF 413. If the N4 rule generated by the SMF 431 is to perform an application traffic detection request, the SMF 431 may deliver the N4 rule including the corresponding PDR and QER, FER, URR to the UPF 413. The UPF 413 may be PSA-UPF, a packet session anchor.

If the UPF 413, which has received a message for requesting update of the N4 rule from the SMF 431, successfully updates the N4 rule, the UPF 413 may deliver a message requesting to resume transmission of DNS message buffered in the EASDF 421, that is, an N4 update response message, to the SMF 431, in operation 812.

Accordingly, in operation 813, the SMF 431 may transmit an update DNS message handling rule to the EASDF 421. In addition, in operation 814, the EASDF 421 may transmit the buffered DNS Response message to the terminal 120.

In operation 814, the application program of the terminal 120 may receive a DNS response.

In operation 815, the application program of the terminal 120 may start an application layer session with the IP address for the FQDN received in the DNS response. For example, it could be a SYN message that initiates a TCP session.

The destination address of the IP message delivering the application layer message delivered by the terminal 120 to the application server 442 in operation 816 is the IP address received in the DNS response message, and this destination IP address may be a message matching the PDR rule in operation 810 of the procedure. When the UPF 413 detects a message that matches the PDR rule, the UPF 413 may perform the corresponding action. This action may be applying a QoS rule, forwarding traffic to a specific destination, or reporting usage related to charging. In addition, the action may be applying a rule for reflective QoS.

In operation 817, the UPF 413 may deliver application layer traffic to the application server 442.

In response to operation 817, response traffic from the application layer server 442 may be delivered to the UPF 413 in operation 818.

As in operation 816, in operation 819, the UPF 413 may detect application traffic using an IP filter, and in case where the detected application traffic matches the PDR received in operation 811 from the SMF 431, the UPF 413 may apply the associated QER, FER, or URR.

In operation 820, in case where the RQ is applied to the QER received in operation 811 described above, the UPF 413 may transmit the RQI to the RAN 110 in case where the RQ is configured in the received downlink traffic.

In operation 821, traffic including the RQI in a GTP header is delivered to the RAN 110, and the RAN 110 may deliver the RQI to the terminal 120.

In operation 822, the terminal 120 may receive the RQI and transmit the corresponding traffic using the QoS Flow requested for UPLINK traffic to be sent to the server in the future.

The operation briefly described with respect to FIG. 6 is described through a more detailed procedure in FIG. 8.

The contents according to the detailed flowchart of the disclosure described above are summarized as a whole from the perspective of the SMF 431 as follows.

In case where the SMF 431 receives a traffic detection filter (FQDN SDF template) marked in FQDN SDF through a PCC rule, the PCC rule is for application traffic detection reporting in FIG. 7, and the PCC rule is for QoS control in FIG. 8.

SMF 431 may receive the FQDN-SDF and PCC rule for traffic control in operation 802, and generate the DNS message rule including a DNS message detection template corresponding to the FQDN-SDF template and a report request for the same (operation 803), and may deliver the generated DNS message rule to the EASDF 421 (operation 804).

In case where the PCC rule is a rule for QoS, a PDU session change procedure is performed on the terminal 120 to apply reflective QoS (operation 805). In this case, RQ support QoS may be delivered to the terminal 120. In this process, the SMF 431 may include an EAS rediscovery indication for removing the DNS cache of the terminal 120.

Thereafter, the DNS procedure for the FQDN corresponding to the FQDN-SDF template is performed by the terminal 120. In case where the EASDF 421 detects a DNS message that meets the DNS message handling rules, the SMF 431 may receive an IP address for an FQDN matching the FQDN-SDF template from the EASDF 421 (operation 809), generate a PDR corresponding to the IP address included in the received message, and generate a QER rule from the PCC rule and deliver the QER rule to the UPF 413 (operations 810 and 811).

When the update is completed in the UPF 413, a message to resume buffered DNS message transmission is delivered to the EASDF 421 (operation 813).

The UPF 413 detects application traffic using an IP filter, and in case where it matches the PDR received from the SMF 431 in 811, the associated QER is applied. In the subsequently received downlink traffic, the PSA-UPF 413 may transmit the RQI to the RAN 110 in case where the RQ is configured.

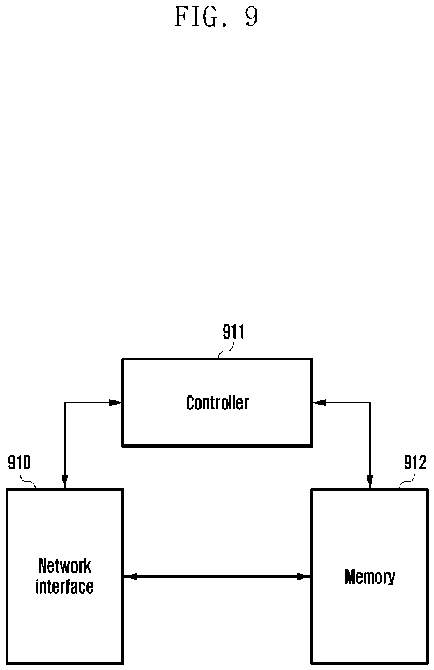

FIG. 9 is a functional block diagram of NF to which the disclosure is applicable.

Before referring to FIG. 9, the NF may be one of all NFs shown in FIGS. 1 to 8. For example, the NF may be any one of RAN, UPF, SMF, AMF, AUSF, NSSF, NEF, NRF, PCF, UDM, AF, EASDF, EAS, AS, and any other NFs that constitute a 5G core system.

With reference to FIG. 9, a network interface 910 may transmit and receive signals or messages with other NFs. For example, in case where the NF is the SMF, the NF may provide an interface for transmitting and receiving the signals or messages described in the disclosure. As another example, in case where the NF is the RNA, the NF may further have a constitution for providing an interface for communication with other NFs in the 5G system and at the same time providing a radio interface with the UE.

The controller 911 may perform the above described operations for the respective NFs according to the disclosure. For example, in case where the NF is the SMF, the NF may control transmission and reception of signals or messages described in the disclosure and control analysis, creation, storage, etc. of messages.

The memory 912 may store programs and various control information needed by the controller 911, and may also store each piece of information described in the disclosure.

In addition, the NF may further include various interfaces for connection with the operator in addition to the constitution illustrated in FIG. 9. The disclosure does not specifically restrict these additional constitutions.

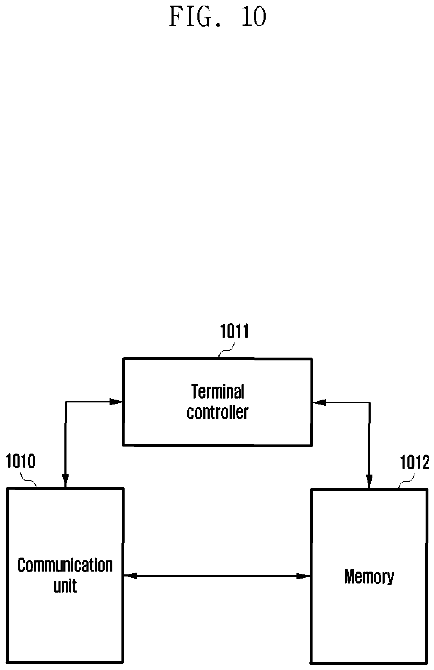

FIG. 10 is a functional block diagram of a terminal to which the disclosure is applicable.

With reference to FIG. 10, the terminal may include a communication unit 1010, a terminal controller 1011, and a memory 1012.

The communication unit 1010 may include a component for processing wireless signals for communication with the RAN. For example, at least one antenna, a power amplifier, a low-noise amplifier, a circuit constitution for band up-conversion to a radio band, a circuit constitution for down-conversion of a received radio band signal to a base band, a filter, an analog-to-digital converter, a digital-to-analog converter, a communication processor, and the like.

The terminal controller 1011 may perform various controls described in the disclosure. Since these control operations have been described in detail in the drawings described above, redundant description will be omitted. In addition, the terminal controller 1011 may be constituted with at least one processor.

The memory 1012 may store various data according to the disclosure and may store data necessary for user operation. This memory 1012 may be implemented in various forms such as ROM, RAM, and hard disk. In the disclosure, the form of implementing the memory 1012 is not limited.

In addition, the terminal may further include additional components in addition to those illustrated in FIG. 10. For example, the terminal may include a display for providing a user interface, a touch screen and/or keys for user input, various other sensors, and the like. The disclosure does not restrict these additional components.

In addition, the application client described above may be implemented in the form of software that is stored in the memory 1012 and runs on the terminal controller 1011.

In addition, the embodiments disclosed in the specification and drawings described above are merely provided as specific examples to easily explain the contents of the disclosure and aid understanding, and are not intended to limit the scope of the disclosure. Therefore, the scope of the disclosure should be construed as including all changes or modified forms derived based on the technical idea of the disclosure in addition to the embodiments disclosed herein.

## Claims

1. A method of a first network node in a wireless communication system, comprising:
receiving, from a second network node, a policy and charging control (PCC) rule and fully qualified domain name (FQDN)-based information that indicate any one of traffic detections via DNS message reporting or a DNS resolution;
generating a DNS message handling rule on the basis of the FQDN-based information;
transmitting the DNS message handling rule to a third network node; and
receiving, from the third network node, an FQDN and an IP address for the FQDN,
wherein the FQDN and the IP address are identified by the third network node via detection of a DNS response message on the basis of the DNS message handling rule.

2. The method of claim 1, wherein in case where the PCC rule indicates the DNS message reporting, the method further comprises transmitting the FQDN and the IP address to the second network node

3. The method of claim 1, wherein in case where the PCC rule indicates the traffic detection through the DNS resolution, the method further comprises:
generating an N4 rule corresponding to the PCC rule; and
transmitting the N4 rule to a fourth network node.

4. The method of claim 3, wherein in case where the PCC rule indicates the traffic detection through the DNS resolution and receives information about the traffic detection associated with the FQDN-based information from the fourth network node, the method further comprises transmitting the information about the traffic detection to the second network node.

5. A method of a second network node in a wireless communication system, comprising:
receiving, from a fifth network node, a policy and charging control (PCC) rule and fully qualified domain name (FQDN)-based information that indicate any one of traffic detections via DNS message reporting or a DNS resolution; and
transmitting the PCC rule and the FQDN-based information to a first network node.

6. The method of claim 5, wherein in case where the PCC rule indicates the DNS message reporting, the method further comprises:
receiving, from the first network node, an FQDN detected by a third network node and an IP address for the FQDN; and
transmitting the FQDN and the IP address to the fifth network node.

7. The method of claim 5, wherein in case where the PCC rule indicates the traffic detection through the DNS resolution, the method further comprises:
receiving, from the first network node, traffic information associated with the FQDN-based information detected by a fourth network node; and
transmitting the traffic information to the fifth network node.

8. A first network node in a wireless communication system, comprising:
a transceiver; and
a controller,
wherein the controller is configured to:
receive, from a second network node, a policy and charging control (PCC) rule and fully qualified domain name (FQDN)-based information that indicate any one of traffic detections via DNS message reporting or a DNS resolution,
generate a DNS message handling rule on the basis of the FQDN-based information,
transmit the DNS message handling rule to a third network node, and
receive, from the third network node, an FQDN and an IP address for the FQDN,
wherein the FQDN and the IP address are identified by the third network node via detection of a DNS response message on the basis of the DNS message handling rule.

9. The first network node of claim 8, wherein in case where the PCC rule indicates the DNS message reporting, the controller is further configured to transmit the FQDN and the IP address to the second network node.

10. The first network node of claim 8, wherein in case where the PCC rule indicates the traffic detection through the DNS resolution, the controller is further configured to:
generate an N4 rule corresponding to the PCC rule; and
transmit the N4 rule to a fourth network node.

11. The first network node of claim 10, wherein in case where the PCC rule indicates the traffic detection through the DNS resolution and receives information about the traffic detection associated with the FQDN-based information from the fourth network node, the controller is further configured to transmit the information about the traffic detection to the second network node.

12. A second network node in a wireless communication system, comprising:
a transceiver; and
a controller,
wherein the controller is configured to:
receive, from a fifth network node, a policy and charging control (PCC) rule and fully qualified domain name (FQDN)-based information that indicate any one of traffic detections via DNS message reporting or a DNS resolution, and
transmit the PCC rule and the FQDN-based information to a first network node.

13. The second network node of claim 12, wherein in case where the PCC rule indicates the DNS message reporting, the controller is further configured to:
receive, from the first network node, an FQDN detected by a third network node and an IP address for the FQDN, and
transmit the FQDN and the IP address to the fifth network node.

14. The second network node of claim 12, wherein in case where the PCC rule indicates the traffic detection through the DNS resolution, the controller is configured to:
receive, from the first network node, traffic information associated with the FQDN-based information detected by a fourth network node, and
transmitting the traffic information to the fifth network node.
